(19) Europäisches Patentamt
European Patent Office
Office européen des brevets

(11) EP 3 707 188 B1

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(21) Anmeldenummer: **18800147.3**

(22) Anmeldetag: **08.11.2018**

(51) Int Cl.:
*C08G 18/78* (2006.01) *C08G 18/67* (2006.01)
*C08G 18/22* (2006.01) *C08G 18/02* (2006.01)
*B29C 64/00* (2017.01) *C08G 18/48* (2006.01)
*C08G 18/18* (2006.01) *C08G 18/24* (2006.01)

(86) Internationale Anmeldenummer:
**PCT/EP2018/080674**

(87) Internationale Veröffentlichungsnummer:
**WO 2019/092140 (16.05.2019 Gazette 2019/20)**

(54) **VERFAHREN ZUR HERSTELLUNG EINES GEGENSTANDES UND VERWENDUNG EINES RADIKALISCH VERNETZBAREN HARZES IN EINEM ADDITIVEN FERTIGUNGSVERFAHREN**

METHOD OF MAKING AN OBJECT AND USE OF A RADICALLY CROSSLINKABLE RESIN BY MEANS OF AN ADDITIVE PRODUCTION METHOD

PROCÉDÉ DE FABRICATION D’UN OBJET ET UTILISATION D’UNE RÉSINE RÉTICULABLE PAR VOIE RADICALAIRE DANS UN PROCÉDÉ DE FABRICATION ADDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2017 EP 17200718**

(43) Veröffentlichungstag der Anmeldung:
**16.09.2020 Patentblatt 2020/38**

(73) Patentinhaber: **Covestro Deutschland AG**
**51373 Leverkusen (DE)**

(72) Erfinder:
- **ACHTEN, Dirk**
  **51375 Leverkusen (DE)**
- **BÜSGEN, Thomas**
  **51377 Leverkusen (DE)**
- **WAGNER, Roland**
  **51375 Leverkusen (DE)**
- **STEMPFLE, Florian Johannes**
  **50825 Köln (DE)**
- **LUDEWIG, Michael**
  **51519 Odenthal (DE)**
- **TOMCZYK, Christoph**
  **51379 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 2 636 511** **WO-A1-2004/033522**
**DE-A1-102004 050 868**

EP 3 707 188 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung eines Gegenstandes, umfassend die Schritte:

I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Gegenstandes entspricht;

II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Gegenstandes entspricht und welche mit der zuvor aufgetragenen Lage verbunden ist;

III) Wiederholen des Schritts II), bis der Gegenstand gebildet ist;

wobei das Abscheiden eines radikalisch vernetzten Harzes in Schritt I) und Schritt II) ein Aufbringen eines radikalisch vernetzbaren Harzes auf den Träger bzw. die vorherige Lage beinhaltet, und wenigstens in Schritt II) durch Einwirken von Energie auf einen ausgewählten Bereich des radikalisch vernetzbaren Harzes, entsprechend dem jeweils ausgewählten Querschnitt des Gegenstandes, erfolgt und
wobei das radikalisch vernetzbare Harz eine Viskosität (23 °C, DIN EN ISO 2884-1) von ≥ 5 mPas bis ≤ 100000 mPas aufweist. Die Erfindung betrifft weiterhin die Verwendung eines solchen Harzes in einem additiven Herstellungsverfahren. WO 2004/033522 A1 offenbart ein Verfahren zur Herstellung eines Polyisocyanats oder eines Polyisocyanat-Folgeprodukts enthaltend mindestens eine Allophanatgruppe, die an dem über zwei Einfachbindungen gebundenen Sauerstoffatom der Allophanatgruppe mindestens eine Acrylat-, Methacrylat-oder Vinylether-Doppelbindung trägt, dadurch gekennzeichnet, dass ein Polyisocyanat oder ein Polyisocyanatfolgeprodukt enthaltend mindestens ein Oxadiazintriongruppe (Formel 1)

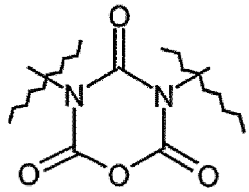
(Formel 1)

mit einem Acrylat-, Methacrylat-oder Vinylether-Doppelbindung haltigen Alkohol bei Temperaturen zwischen -20 bis 100 °C reagiert. Die Patentanmeldung betrifft ebenfalls

Beschichtungs-, Klebstoff-, Härtmassensysteme und Dichtungsmassen enthaltend Verbindungen hergestellt nach diesem Verfahren.

DE 10 2004 050868 A1 offenbart eine biokompatible, niedrigviskose, strahlungshärtbare Formulierung zur Herstellung von medizintechnischen Produkten, insbesondere Ohrpassstücken, Otoplastiken, Schalen oder Ohrstücken, mittels PNP bzw. Stereolithographieverfahren, enthaltend: a) 15-60 Gew.-% eines monomeren oder oligomeren Dimethacrylats auf Basis von Bisphenol A oder Bisphenol F; b) 0-50 Gew.-% eines oder mehrerer monomerer/oligomerer Urethan(meth)acrylate mit einer Funktionalität von n < 4, einer Viskosität < 30 Pa.s und einem Molekülgewicht < 3500; c) 2-25 Gew.-% eines monomeren aliphatischen oder cycloaliphatischen Dimethacrylats mit einer Viskosität < 3 Pa.s; d) 2-35 Gew.-% eines Iminooxadiazondionderivates, charakterisiert durch 3 Methacrylat- und/oder Acrylatfunktionen; e) 0-15 Gew.-% eines oder mehrerer monofunktioneller Methacrylate; f) 0,5-6 Gew.-% eines oder einer Kombination mehrerer Photoinitiatoren, deren Absorption im Wellenlängenbereich des eingesetzten Laserstrahls bzw. der Bestrahlungsquelle liegt; g) 0-0,5 Gew.-% eines oder mehrerer anaerober Inhibitoren; h) 0-40 Gew.-% an Füllstoffen mit einer Partikelgröße < 25 μm; i) 0-5 Gew.-% an Farbmitteln; j) 0-5 Gew.-% an üblichen Additiven wie UV-Stabilisatoren oder Verlaufsadditiven, wobei der Anteil der Komponenten a) bis j) zusammen 100 Gew.-% beträgt. Nicht offenbart wird jedoch die Anwesenheit von Oxadiazintrionderivaten.

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein additives Fertigungsverfahren bereitzustellen, bei dem die hergestellten Gegenstände gleichzeitig eine hohe Auflösung und eine hohe Festigkeit aufweisen können. Schließlich ist eine Aufgabe der Erfindung, solche Gegenstände möglichst kosteneffizient und/oder individualisiert und/oder ressourcenschonend herstellen zu können.

Erfindungsgemäß gelöst wird die Aufgabe durch ein Verfahren gemäß Anspruch 1 und eine Verwendung gemäß Anspruch 13. Vorteilhafte Weiterbildungen sind in den Unteransprüchen angegeben.

Erfindungsgemäß vorgeschlagen wird ein Verfahren zur Herstellung eines Gegenstandes, umfassend die Schritte:

I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Gegenstandes entspricht;

II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Gegenstandes entspricht und welche mit der zuvor aufgetragenen Lage verbunden ist;

III) Wiederholen des Schritts II), bis der Gegenstand gebildet ist;

wobei das Abscheiden eines radikalisch vernetzten Harzes in Schritt I) und Schritt II) ein Aufbringen eines radikalisch vernetzbaren Harzes auf den Träger bzw. die vorherige Lage beinhaltet, und wenigstens in Schritt II) durch Einwirken von Energie auf einen ausgewählten Bereich des radikalisch vernetzbaren Harzes, entsprechend dem jeweils ausgewählten Querschnitt des Gegenstandes, erfolgt und
wobei das radikalisch vernetzbare Harz eine Viskosität (23 °C, DIN EN ISO 2884-1) von $\geq$ 5 mPas bis $\leq$ 100000 mPas aufweist und wobei
das radikalisch vernetzbare Harz eine härtbare Komponente umfasst, welche durch die Reaktion eines Polyisocyanats oder eines Polyisocyanat-Folgeprodukts enthaltend mindestens eine Oxadiazintriongruppe (Formel 1)

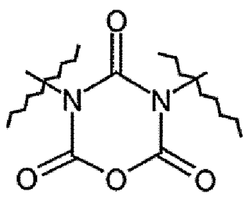

(Formel 1)

mit einem Acrylat-, Methacrylat- oder Vinylether-Doppelbindungen enthaltenden Verbindung mit Zerewitinoff-aktiven H-Atomen erhalten wird.

Das Material, aus dem der Vorläufer im additiven Fertigungsverfahren erhalten wird, wird im Rahmen der vorliegenden Erfindung allgemein als "Aufbaumaterial" bezeichnet.

Der Aufbau des Gegenstands lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). In Schritt I) des Verfahrens erfolgt das Abscheiden eines radikalisch vernetzten Harzes auf einem Träger. Dieses ist gewöhnlich der erste Schritt in Inkjet-, Stereolithographie- und DLP-Verfahren. Auf diese Weise wird eine Lage eines mit dem Träger verbundenen Aufbaumaterials erhalten, welche einem ersten ausgewählten Querschnitt des Vorläufers entspricht. Das Aufbaumaterial ist bevorzugt so mit dem Träger verbunden, dass es jederzeit, insbesondere nach Herstellung des Gegenstandes, vom Träger abgelöst werden kann bevorzugt ohne, dass der Gegenstand dabei verformt wird.

Gemäß der Anweisung von Schritt III) wird Schritt II) so lange wiederholt, bis der gewünschte Vorläufer gebildet ist. In Schritt II) erfolgt das Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist erfindungsgemäß vorgesehen, dass das Abscheiden eines radikalisch vernetzten Harzes wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Gegenstandes, erfolgt. Dieses kann sowohl durch selektives Belichten (Stereolithographie, DLP) des Harzes als auch durch selektives Auftragen des Harzes, gefolgt von einem Belichtungsschritt, der aufgrund des vorigen selektiven Auftragens des Harzes nicht mehr selektiv sein muss (Inkjet-Verfahren). Das Abscheiden beinhaltet dabei sowohl das Aufbringen des radikalisch vernetzbaren Harzes als auch dessen mindestens teilweises Belichten und/oder Bestrahlen. Das Aufbringen bzw. Auftragen des radikalisch vernetzbaren Harzes kann mittels jeder dem Fachmann bekannten Methode für radikalisch vernetzbare Harze erfolgen. Bevorzugt ist das Aufbringen des radikalisch vernetzbaren Harzes ausgewählt aus der Gruppe bestehend aus einem Ablegen, einem Drucken, einem Rakeln, einem Siebdrucken oder einer Kombination aus mindestens zwei hiervon.

Im Kontext der vorliegenden Erfindung werden die Begriffe "radikalisch vernetzbares Harz" und "radikalisch vernetztes Harz" benutzt. Hierbei wird das radikalisch vernetzbare Harz durch das Belichten und/oder Bestrahlen, welches radikalische Vernetzungsreaktionen auslöst, in das radikalisch vernetzte Harz überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Harz weist eine Viskosität (23 °C, DIN EN ISO 2884-1) von $\geq$ 5 mPas bis $\leq$ 100000 mPas auf. Somit ist es zumindest für die Zwecke der additiven Fertigung als flüssiges Harz anzusehen. Vorzugsweise beträgt die Viskosität $\geq$ 50 mPas bis $\leq$ 20000 mPas, mehr bevorzugt $\geq$ 500 mPas bis $\leq$ 5000 mPas.

Polyisocyanate oder Polyisocyanat-Folgeprodukte, die durch die Umsetzung eines Oxadiazintrionfunktionellen Polyisocyanats oder Polyisocyanatfolgeprodukts mit einem Acrylat-, Methacrylat-oder Vinylether-Doppelbindung haltigen Alkohol (vorzugsweise bei Temperaturen zwischen-20 °C bis 100 °C sowie unter Zusatz eines basischen Katalysators sowie eines oder mehrerer Stabilisatoren) lassen sich durch Formel 2 detaillierter beschreiben:

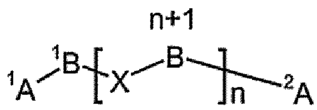

(Formel 2)

Die Platzhalter in Formel 2 seien im Folgenden erläutert. $^1A$, $^2A$ stehen für Isocyanat oder für gleiche oder verschiedene Strukturen von Isocyanat-Folgeprodukten, welche Iminooxadiazindion-, Isocyanurat-, Uretdion-, Urethan-, Allophanat-, Biuret-Harnstoff, Harnstoff oder Oxadiazintrion-Strukturen enthalten und N-ständig die untengenannten Reste $^1B$ bis $^{n+1}B$ tragen.

$^1B$ bis $^{n+1}B$ sind gleiche oder verschiedene Reste, die durch gedankliche Abstraktion der beiden Isocyanatgruppen eines aliphatischen, cycloaliphatischen oder araliphatischen Diisocyanats entstehen.

X steht für eine der Strukturen X-1 und/oder X-2, sowie gegebenenfalls anteilig gleiche oder verschiedene Reste von Isocyanat-Folgeprodukten, welche Iminooxadiazindion-, Isocyanurat-, Uretdion-, Urethan-, Allophanat-, Biuret-Harnstoff, Harnstoff-oder Oxadiazintrion-Strukturen enthalten:

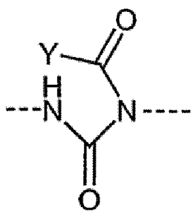

(Struktur X-1)

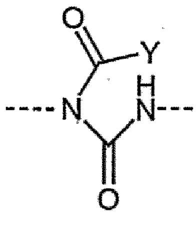

(Struktur X-2)

Y steht für einen organischen Rest, der mindestens eine aktivierte Doppelbindung enthält; n ist eine Zahl größer als eins und kleiner als 20, und stellt dabei das Mittel aller in der Verbindung vorliegenden Moleküle der Formel 2 dar.

Bei den Teilstrukturen $^1A$, $^2A$ handelt es sich um Isocyanat oder um gleiche oder verschiedene Strukturen von Isocyanat-Folgeprodukten, welche vom Iminooxadiazindion-, Isocyanurat-, Uretdion-, Urethan-, Allophanat-, Biuret-Harnstoff, Harnstoff- oder Oxadiazintrion-Strukturtyp sind und N-ständig die untengenannten Reste B tragen. Bevorzugt stehen $^1A$, $^2A$ für Isocyanatgruppen, blockierte Isocyanatgruppen oder Urethangruppen. Als Urethangruppen sind bevorzugt Urethane, die einen ungesättigten Rest Y aufweisen und durch Reaktion jeweils eines Moleküls H-Y mit einer

Isocyanatgruppe entstehen, bevorzugt sind Urethane, die die gleichen Reste tragen, so dass $^1A$ gleich $^2A$ ist. Bevorzugt stehen $^1A$, $^2A$ für Isocyanatgruppen, wobei bevorzugt $^1A$ = $^2A$.

Bei den Teilstrukturen $^1B$ bis $^{n+1}B$ handelt es sich um diejenigen Reste, die durch gedankliche Abstraktion der beiden Isocyanatgruppen eines aliphatischen, cycloaliphatischen oder araliphatischen Diisocyanats entstehen und durch die Umsetzung eines auf Basis eines oder mehrerer dieser Diisocyanate basierenden Oxadiazintrions in das Bindemittel eingebaut werden kann.

Die Gehalte der funktionellen Gruppen in den Produkten für das erfindungsgemäße Verfahren, bestimmt durch $^{13}C$-NMR-Spektroskopie, wobei nur die funktionellen Gruppen anhand der C-Atome, die mit O und N Atomen verbunden sind quantitativ ausgewertet werden, sind bevorzugt:

5-50 % Allophanat (wie in den Strukturen X-1 und X-2 enthalten),

0-5 % Uretdion

0,1-30 % Oxadiazintrion, bevorzugt 0,2-20 %, bevorzugt 0,5-10%.

1-60 % Urethan

0-35% Isocyanurat

0-30% Isocyanat

Bevorzugte Ausgangsstoffe enthaltend mindestens eine Oxadiazintriongruppe für die Synthese der erfindungsgemäß einzusetzenden Polyisocyanate oder Polyisocyanatfolgeprodukte können durch Umsetzung von aliphatischen, cycloaliphatischen und oder araliphatischen Di-oder Polyisocyanaten mit Kohlendioxid hergestellt werden. Beispiele bevorzugter aliphatischer, cycloaliphatischer und oder araliphatischer Diisocyanate umfassen Ethylendiisocyanat, 1,4-Diisocyanatobutan, 1,5 Diisocyanatopentan, 1,6-Diisocyanatohexan, Trimethylhexandiisocyanat, 1,3- und 1,4-bis-isocyanatomethylcyclohexan, Isophorondiisocyanat, 4, 4-Diisocyanatodicyclohexylmethan und die araliphatischen Diisocyanate 1,3- und 1,4-Xylylendiisocyanate (XDI) oder Mischungen hiervon. Bevorzugt sind 1, 6-Diisocyanatohexan und 1,5 Diisocyanatopentan.

Bevorzugte Polyisocyanate enthaltend mindestens ein Oxadiazintriongruppe entsprechend der Formel 3:

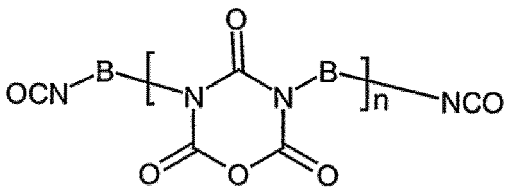

(Formel 3)

wobei n, in den hier bevorzugten Oxadiazintrionen als Edukte zur Synthese für die erfindungsgemäßen Bindemittel, in Formel 3 einer Zahl größer oder gleich1 und kleiner als 20 entspricht, bevorzugt aber in ein und demselben Polyisocyanat Moleküle mit unterschiedlichem $n_i$ gleichzeitig vorliegen. Bevorzugt sind diejenigen Oxadiazintrione mit einem Mittelwert

$$n = \frac{\sum_i n_i}{i},$$

der kleiner 10, bevorzugt kleiner 5 oder bevorzugt kleiner 3 ist.

Derartige Polyisocyanate sind kommerziell erhältlich (Baymicron Oxa WM06). Die Herstellung wird in der deutschen Patentanmeldung DE 167066 beschrieben. Bei der Herstellung des Oxadiazintrions gemäß dieser Anmeldung entstehen je nach Reaktionsbedingungen Uretdiongruppen zu 0.1-5 Gew.-%.

Bevorzugte Polyisocyanatfolgeprodukte enthaltend mindestens ein Oxadiazintriongruppe entsprechen der Formel 4:

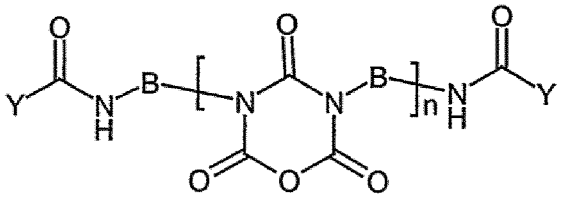

(Formel 4)

Sie werden bevorzugt durch Umsetzung von Polyisocyanaten enthaltend mindestens ein Oxadiazintriongruppe entsprechen der Formel 3 mit Verbindungen H-Y hergestellt.

Bei der Teilstruktur Y handelt es sich um einen Rest der mindestens eine durch elektromagnetische Strahlung polymerisierbare Doppelbindung enthält und durch gedankliche Abstraktion des Protons aus der mit Isocyanaten reaktiven funktionelle Gruppe dieses Restes gebildet wird. Mit Isocyanaten reaktive funktionelle Gruppe sind Alkohol (-OH), Amin (NH) oder Thiol (SH) Gruppen gemeint, bevorzugt sind Amin-und Alkoholgruppen, besonders bevorzugt sind Alkoholgruppen. Mit durch elektromagnetische Strahlung polymerisierbare Doppelbindungen sind Vinyl-, Vinylether-, Propenyl-, Allyl-, Maleinyl-, Fumaryl-, Maleinimid-, Dicyclopentadienyl-, Acrylamid-, Acryl-und Methacryl-Gruppen gemeint, bevorzugt sind Vinylether-, Acryl-und Methacryl-Gruppen, besonders bevorzugt sind Acrylgruppen.

Die in der Struktur X-1 und X-2 beschriebene Allophanatgruppe und die in den Strukturen $^1$A, $^2$A gegebenenfalls enthaltenen Urethangruppen basieren auf der Teilstruktur Y und diese auf dem besonders bevorzugt eingesetzten von Y gedanklich ableitbaren Alkohol, wobei auch Mischungen verschiedener Alkohole Verwendung finden können.

Erfindungsgemäss werden die Polyisocyanate oder die Polyisocyanatfolgeprodukte enthaltend mindestens eine Oxadiazintriongruppe mit beispielsweise diesen Alkoholen umgesetzt.

Bevorzugte Alkohole sind dabei 2-Hydroxyethyl(meth)acrylat, Polyethylenoxidmono(meth)acrylat (PEA6/PEM6 ; Laporte Performance Chemicals Ltd.), Polypropylenoxidmono(meth)acrylat (PPA6, PPM5S; Laporte Performance Chemicals Ltd.), Polyalkylenoxidmono(meth)acrylat (PEM63P, Laporte Performance Chemicals Ltd.), Poly (ε-caprolacton)mono(meth)acrylate wie z. B. Tone M100 (Union Carbide), 2-Hydroxypropyl(meth)acrylat, 4-Hydroxybutyl(meth)-acrylat, 3-Hydroxy-2,2-dimethylpropyl(meth)acrylat, die Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische; bevorzugterweise die acrylierten Monoalkohole wie Glycerindi(meth)acrylat, Trimethylolpropandi(meth)acrylat, Pentaerythrittri(meth)acrylat, Dipentaerythritpenta(meth)acrylat. Erfindungsgemäß sind auch Alkohole, die sich aus der Umsetzung von doppelbindungshaltigen Säuren mit gegebenenfalls doppelbindungshaltigen Epoxidverbindungen erhalten lassen, so z. B. die Umsetzungsprodukte von (Meth)acrylsäure mit Glycidyl(meth)acrylat oder Bisphenol-A-diglycidylether.

Die Teilstrukturen X können neben Allophanatstrukturen X-1 und X-2 gegebenenfalls anteilig weitere gleiche oder verschiedene Reste von Isocyanat-Folgeprodukten, welche Iminooxadiazindion-, Isocyanurat-, Uretdion-, Urethan-, Allophanat-, Biuret- Harnstoff- oder Oxadiazintrion-Strukturen enthalten, enthalten. Bevorzugt sind Strukturen vom Urethantyp, die durch Reaktion eines Dialkohols mit Isocyanatgruppen entstehen. Dabei finden bevorzugt Ethylenglycol, Diethylenglycol, Triethylenglycol, Tetraethylenglycol, Dipropylenglycol, Tripropylenglycol, kurzkettige Polyether auf Basis von Ethylenoxid, Propylenoxid oder Gemische daraus, 1, 2- und 1,3-Propandiol, die isomeren Butandiole, Neopentylglycol, 1,6-Hexandiol, 2-Ethyl-1,3-hexandiol, Cyclohexandimethanol, Dodecandiol, Mono(meth) acrylate des Trimethylolpropans und- ethans, des Glycerins, und deren epoxilierten und propoxylierten Derivate bzw. die durch Veresterung selbiger Alkohole mit Acrylsäure erhältlichen technischen Gemische, 2-Aminoethanol und die isomeren Aminopropanole Verwendung. Auch kurzkettige Polyesterdiole wie z. B. ε-Caprolacton verlängerte Diole wie Ethandiol, 1, 2- und 1,3-Propandiol, die isomeren Butandiole, Neopentylglycol, 1,6-Hexandiol, 2-Ethyl-1,3-hexandiol, Cyclohexandimethanol werden verwendet. Bevorzugt sind Diole wie Ethandiol, Hexandiol, Mono (meth)acrylate des Trimethylolpropans und des Glycerins, besonders bevorzugt sind Propandiol, Butandiol, Hexandiol und Neopentylglycol.

Zur Synthese kann das Oxadiazintrion haltige Polyisocyanat oder Polyisocyanatfolgeprodukte vorgelegt, auf -20 bis 100 °C, bevorzugt auf 0 bis 100 °C oder 20 bis 80° C oder bevorzugt auf 40 bis 60 °C temperiert und die erforderliche Menge an Stabilisator darin gelöst werden. Nach der Zugabe des eine aktivierte Doppelbindung enthaltenden Alkohols und eines geeigneten Katalysators bildet sich spontan Kohlendioxid, das als Gas entweicht. Das Entfernen des Kohlendioxids aus der Reaktionsmischung kann durch Anlegen von Vakuum bevorzugt in einem Bereich 800 und 0 mbar, oder bevorzugt von 200 und 10 mbar oder durch Einleiten eines inerten Gases wie Luft oder Stickstoff beschleunigt werden. Bevorzugt wird gegen Ende der Umsetzung ein Vakuum von 200 bis 10 mbar angelegt und aufrecht erhalten, bis keine Kohlendioxid-Entwicklung mehr nachweisbar ist.

Bei der Umsetzung kann ein inertes Lösungsmittel, wie z. B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid verwendet werden, bevorzugt wird aber kein Lösungsmittel zugesetzt. Alternativ kann die Umsetzung auch in Verdünnungsmitteln, die bei der UV-Härtung ebenfalls (co) polymerisieren, durchgeführt werden. Geeignete Reaktivverdünner

sind beschrieben in P. K. T. Oldring (Ed.), Chemistry & Technology of UV & EB Formulations For Coatings, Inks & Paints, Vol. 2,1991, SITA Technology, London, S. 237-285. Als Beispiele seien genannt die Ester der Acrylsäure oder Methacrylsäure, bevorzugt der Acrylsäure der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Dreiwertige Alkohole sind Glycerin oder Trimethylolpropan oder deren alkoxylierte Derivate. Vierwertige Alkohole sind Pentaerythrit oder dessen alkoxylierte Derivate. Bevorzugte Alkohole weisen einen geringen Hydroxylgehalt, bevorzugt unter 20 mg/g KOH, auf.

Allgemein geeignete Katalysatoren zur Umsetzung der Oxadiazintrione sind Verbindungen mit einem $pK_a$ von > 7.5. Dabei sind für jeden eingesetzten doppelbindungshaltigen Alkohol unterschiedliche Katalysatoren besser geeignet. Insbesondere was den Reaktionsumsatz am Oxadiazintrionring angeht und die Neigung zur Polymerisation einer, den Katalysator enthaltenden Reaktionsmischung, werden durch die Wahl des Katalysators und der Katalysatormenge stark beeinflusst. Vor allem spielt hier die Neigung gängiger Stabilisatoren selbst mit dem Oxadiazintrionring bzw. den Isocyanatgruppen abzureagieren eine entscheidende Rolle. Bevorzugt werden die Katalysatoren in einem Bereich von 0,001 bis 5,0 Gew.-%, oder bevorzugt von 0,01 bis 2,0 Gew.-%, oder bevorzugt von 0,05 bis 0,5 Gew.-%, bezogen auf die Gesamtmenge der den Katalysator enthaltenden Reaktionsmischung, eingesetzt.

Geeignete Katalysatoren sind tertiäre Amine wie Trimethylamin, Triethylamin, Tributylamin, Bis-isopropylethylamin, N,N-Dimethylbenzylamin, 1,5-Diazabicyclo-[4.3.0]non-5-en (DBN), 1,8-Diazabicyclo[5.4.0]undec-7-en (DBU), Tetramethylbutandiamin, Tetramethylpropandiamin, Dimethylaminoarylverbindungen wie Dimethylaminobenzol, Dimethylaminopyridin; Alkali-und Erdalkalisalze der Kohlensäure, Ameisensäure, Essigsäure, Propionsäure, Benzoesäure sowie substituierter Benzoesäuren sowie Alkoholate von aliphatischen und aromatischen Hydroxylverbindungen wie Natriumphenolat und Natriummethylat. Auch cyclische aliphatische und cyclisch aromatische Stickstoffverbindungen werden angewendet wie $C_1$-$C_4$-N-Alkylpyrrole,-pyrroline,-pyrrolidine, -pyrazole, -imidazole, -imidazoline, -imidazolidine, die isomere Triazole, die ggf. alkylierten Pyrimidine, Pyridazine, die isomeren Triazine, Chinoline, Isochinoline, Chinoxaline und Acridine. Bevorzugte Katalysatoren sind tertiäre Amine wie Trimethylamin, Triethylamin, Tributylamin, Bis-isopropylethylamin, N, N-Dimethylbenzylamin, 1,5-Diazabicyclo [4.3.0] non-5-en (DBN), 1-8-Diazabicyclo[5.4.0] undec-7-en (DBU), besonders bevorzugte Katalysatoren sind Triethylamin, Bis-isopropylethylamin, 1,8-Diazabicyclo[5.4. 0]undec-7-en (DBU).

Synthesebeispiele können der Patentanmeldung WO 2004/033522 A1 entnommen werden.

Neben der härtbaren Komponente kann das radikalisch vernetzbare Harz auch eine nicht härtbare Komponente umfassen, in der Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente zusammengefasst sind. Diese Hilfs- und Zusatzmittel, ausgenommen Füllstoffe und Flammschutzmittel, liegen üblicherweise in einer Menge von weniger als 10 Gew.-%, vorzugsweise weniger als 5 Gew.-%, oder bevorzugt bis zu 3 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, oder bevorzugt höchstens 30 Gew.-%, berechnet als Gesamtmenge an eingesetzten Flammschutzmitteln bezogen auf das Gesamtgewicht des radikalisch vernetzbaren Harzes vor.

Geeignete Füllstoffe sind beispielsweise $AlOH_3$, $CaCO_3$, Metallpigmente wie $TiO_2$ und weitere bekannte übliche Füllstoffe. Diese Füllstoffe werden vorzugsweise in Mengen von höchstens 70 Gew.-%, bevorzugt höchstens 50 Gew.-%, oder bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie

z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Bevorzugte UV-Stabilisatoren sind solche, die Strahlung einer Wellenlänge < 400 nm vollständig absorbieren. Hierzu zählen beispielsweise die genannten Benztriazolderivate. Weitere bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Harz vorzugsweise in Mengen von 0,001 bis 3,0 Gew.-%, oder bevorzugt 0,005 bis 2 Gew.-%, berechnet als Gesamtmenge an eingesetzten UV-Stabilisatoren bezogen auf das Gesamtgewicht des radikalisch vernetzbaren Harzes, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, oder bevorzugt 0,02 bis 2,0 Gew.-%, berechnet als Gesamtmenge an eingesetzten Antioxidantien bezogen auf das Gesamtgewicht des radikalisch vernetzbaren Harze, eingesetzt.

Geeignete Radikalinhibitoren bzw. Verzögerer sind bevorzugt solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophendiyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew% bis 3 Gew.% eingesetzt.

Ausführungsformen und weitere Aspekte der vorliegenden Erfindung werden im Folgenden erläutert. Sie können beliebig miteinander kombiniert werden, sofern sich aus dem Kontext nicht eindeutig das Gegenteil ergibt.

In einer bevorzugten Ausführungsform wird das Polyisocyanat oder Polyisocyanat-Folgeprodukt enthaltend mindestens eine Oxadiazintriongruppe (Formel 1) unter Verwendung von 1,6-Hexamethylendiisocyanat und/oder 1,5-Pentamethylendiisocyanat als Reaktionskomponente hergestellt.

In einer weiteren bevorzugten Ausführungsform wird das Polyisocyanat oder Polyisocyanat-Folgeprodukt enthaltend mindestens eine Oxadiazintriongruppe (Formel 1) unter Verwendung eines Polyesteralkohols enthaltend (Meth)Acrylatgruppen hergestellt.

In einer weiteren bevorzugten Ausführungsform liegt in dem Harz die härtbare Komponente in einem Anteil von > 0,1 Gewichts-% bis ≤ 90 Gewichts-%, oder bevorzugt ≥ 1 Gewichts-% bis ≤ 70 Gewichts-%, oder bevorzugt ≥ 5 Gewichts-% bis ≤ 50 Gewichts-%, bezogen auf das Gesamtgewicht des Harzes, vor.

Die Gehalte können durch $^{13}$C-NMR-Spektroskopie bestimmt werden, wobei nur die funktionellen Gruppen anhand der C Atome, die mit O und N Atomen verbunden sind, quantitativ ausgewertet werden. Wie bereits ausgeführt sind 0,2-20 Gewichts-% bevorzugt und 0,5-10 Gewichts-% mehr bevorzugt.

In einer weiteren bevorzugten Ausführungsform liegen in dem Harz freie Isocyanat-Gruppen in einem Anteil von > 0 Gewichts-% bis ≤ 30 Gewichts-%, oder bevorzugt ≥ 0,5 Gewichts-% bis ≤ 20 Gewichts-%, oder bevorzugt ≥ 1 Gewichts-% bis ≤ 10 Gewichts-%, bezogen auf das Gesamtgewicht des Harzes, vor.

In einer weiteren bevorzugten Ausführungsform liegen in dem Harz funktionelle Gruppen mit Zerewitinoff-aktiven H-Atomen in einem Anteil von > 0 Gewichts-% bis ≤ 10 Gewichts-%, oder bevorzugt ≥ 0,5 bis ≤ 8 Gewichts-%, oder bevorzugt ≥ 2 bis ≤ 6 Gewichts-%, bezogen auf das Gesamtgewicht des Harzes, vor.

In einer weiteren bevorzugten Ausführungsform liegen in dem Harz freie polymerisationsaktive C=C Doppelbindungen in einem Anteil von > 1 Gewichts-% bis ≤ 10 Gewichts-%, bezogen auf das Gesamtgewicht des Harzes, vor. Bevorzugt liegen in dem Harz freie polymerisationsaktive C=C Doppelbindungen in einem Anteil von 1,5 bis 8 Gewichts-%, oder bevorzugt 2 bis 6 Gewichts-%, bezogen auf das Gesamtgewicht des Harzes, vor.

In einer weiteren bevorzugten Ausführungsform wird nach Schritt III) weiterhin Schritt IV) durchgeführt:

IV) Behandeln des nach Schritt III) erhaltenen Gegenstands bei Bedingungen, die ausreichen, um im radikalisch vernetzten Harz des erhaltenen Gegenstands vorliegende Isocyanat-Gruppen zumindest teilweise mit weiteren

NCO-Gruppen oder Verbindungen mit Zerewitinoff-aktiven H-Atomen mit Reaktion zu bringen.

Das Behandeln in Schritt IV) kann im einfachsten Fall ein Lagern bei Raumtemperatur (20 °C) sein. Es ist auch möglich, bei einer Temperatur oberhalb der Raumtemperatur zu lagern. Während des Schritts IV) reagieren die NCO-Gruppen miteinander unter weiterer Vernetzung des zuvor schon radikalisch vernetzten Materials. Diese Reaktion führt zumindest teilweise zur Trimerisierung zu Isocyanurat-Gruppen. Es ist erfindungsgemäß mit eingeschlossen, dass auch Uretdion-, Allophanat-, Urea-, Urethan-, Biuret-, Iminooxadiazindion- und/oder Oxadiazintriongruppen aus den NCO-Gruppen gebildet werden können. Solche Nebenreaktionen können gezielt eingesetzt werden, um beispielsweise die Glasübergangstemperatur Tg des erhaltenen Materials zu beeinflussen.

Vorzugsweise wird die Reaktion durchgeführt, bis ≤ 20%, bevorzugt ≤ 10% und mehr bevorzugt ≤ 5% der ursprünglich in der härtbaren Komponente vorhandenen NCO-Gruppen noch vorhanden sind. Dieses lässt sich mittels quantitativer IR-Spektroskopie bestimmen. Es ist weiter bevorzugt, dass in Schritt IV) ≥ 50%, ≥ 60%, ≥ 70% oder ≥ 80%, der in der härtbaren Komponente vorliegenden Isocyanatgruppen in Isocyanurat-Gruppen überführt werden.

Es ist bevorzugt, dass Schritt IV) erst dann durchgeführt wird, wenn das gesamte Aufbaumaterial des Gegenstands seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10 bei 20 °C sich die Graphen des Speichermoduls G' und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Harz kann ein Speichermodul G' (DMA, Platte/Platte-Oszillationsviskosimeter gemäß ISO 6721-10 bei 20 °C und einer Kreisfrequenz von 1/s) von ≥ $10^6$ Pa aufweisen.

Bevorzugte Bedingungen sind ein Erwärmen des Gegenstands auf eine Temperatur von ≥ 60°C. Vorzugsweise beträgt diese Temperatur ≥ 80 °C bis ≤ 250 °C, mehr bevorzugt ≥ 90 °C bis ≤ 190 °C. Die gewählte Temperatur oder der gewählte Temperaturbereich in Schritt IV) kann beispielsweise für ≥ 5 Minuten bis ≤ 48 Stunden, bevorzugt ≥ 15 Minuten bis ≤ 24 Stunden und mehr bevorzugt ≥ 1 Stunde bis ≤ 12 Stunden gehalten werden.

In einer weiteren bevorzugten Ausführungsform umfasst das radikalisch vernetzbare Harz weiterhin einen Radikalstarter und/oder einen Isocyanat-Trimerisierungskatalysator. Um eine unerwünschte Erhöhung der Viskosität des radikalisch vernetzbaren Harzes zu verhindern, können Radikalstarter und/oder Isocyanat-Trimerisierungskatalysator erst unmittelbar vor Beginn des erfindungsgemäßen Verfahrens dem Harz hinzugefügt werden.

Als Radikalstarter kommen thermische und/oder photochemische Radikalstarter (Photoinitiatoren) in Betracht. Es ist auch möglich, dass gleichzeitig thermische und photochemische Radikalstarter eingesetzt werden. Geeignete thermische Radikalstarter sind beispielsweise Azobisisobutyronitril (AIBN), Dibenzoylperoxid (DBPO), Di-tert-butylperoxid und/oder anorganische Peroxide wie Peroxodisulfate.

Bei den Photoinitiatoren wird prinzipiell zwischen zwei Typen unterschieden, dem unimolekularen Typ (I) und dem bimolekularen Typ (II). Geeignete Typ (I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethylbenzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur®500 (eine Mischung von Benzophenon und (1-Hydroxycyclohexyl)phenylketon, Fa. Ciba, Lampertheim, DE), Irgacure®819 DW (Phenylbis-(2, 4, 6-trimethylbenzoyl)phosphinoxid, Fa. Ciba, Lampertheim, DE) oder Esacure® KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

Bei den Photoinitiatoren sollte darauf geachtet werden, dass sie eine ausreichende Reaktivität gegenüber der verwendeten Strahlenquelle haben. Es ist eine Vielzahl von Photoinitiatoren auf dem Markt bekannt. Durch kommerziell verfügbare Photoinitiatoren wird der Wellenlängenbereich im gesamten UV-VIS Spektrum abgedeckt. Photoinitiatoren finden Einsatz bei der Herstellung von Lacken, Druckfarben und Klebstoffen sowie im Dentalbereich.

Im erfindungsgemäßen Verfahren kommt der Photoinitiator bevorzugt in einer auf die Menge der eingesetzten härtbaren olefinisch ungesättigte Doppelbindungen tragenden Komponente bezogenen Konzentration von 0,01 bis 6,0 Gew.-%, oder bevorzugt von 0,05 bis 4,0 Gew.-% oder bevorzugt von 0,1 bis 3,0 Gew.-% zum Einsatz.

Geeignete Isocyanat-Trimerisierungskatalysatoren sind prinzipiell alle Verbindungen, die die Addition von Isocyanatgruppen zu Isocyanuratgruppen beschleunigen und dadurch die vorliegenden isocyanatgruppenhaltigen Moleküle vernetzen.

Geeignete Isocyanat-Trimerisierungskatalysatoren sind beispielsweise einfache tertiäre Amine, wie z. B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z. B. Triethanolamin, N-Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z. B. DBU, mit einfachen niedermolekularen aliphatischen Alkoholen bestehenden Katalysatorsysteme.

Als Isocyanat-Trimerisierungskatalysatoren ebenfalls geeignet ist eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z. B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z. B. Natrium- oder Kaliumbenzoat, die aus der GB-PS 1 391 066 und GB-PS 1 386 399 bekannten Alkaliphenolate, wie z. B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z. B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z. B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z. B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979) beschriebenen Art, wie z. B. Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Die Isocyanat-Trimerisierungskatalysatoren können sowohl einzeln als auch in Form beliebiger Gemische untereinander im erfindungsgemäßen Verfahren eingesetzt werden.

Als Isocyanat-Trimerisierungskatalysatoren hervorgehoben seien Natrium- und Kaliumsalze aliphatischer Carbonsäuren mit 2 bis 20 C-Atomen in Kombination mit Komplexbildnern wie Kronenethern oder Polyethylen- oder Polypropylenglykolen sowie aliphatisch substituierte Zinnverbindungen oder Phosphine.

Im erfindungsgemäßen Verfahren kommt der Isocyanat-Trimerisierungskatalysator bevorzugt in einer auf die Menge der eingesetzten härtbaren Komponente bezogenen Konzentration von 0,0005 bis 5,0 Gew.-%, oder bevorzugt von 0,0010 bis 2,0 Gew.-%, oder bevorzugt von 0,0015 bis 1,0 Gew.-% zum Einsatz.

Die beim erfindungsgemäßen Verfahren zum Einsatz gelangenden Isocyanat-Trimerisierungskatalysatoren sind in den Mengen, die zur Initiierung der Trimerisierungsreaktion benötigt werden, in der Regel ausreichend in dem radikalisch vernetzbaren Harz löslich. Die Zugabe des Isocyanat-Trimerisierungskatalysators erfolgt daher vorzugsweise in Substanz.

In einer weiteren bevorzugten Ausführungsform ist der Radikalstarter ausgewählt aus der Gruppe: $\alpha$-Hydroxyphenylketon, Benzyldimethylketal und/oder 2,4,6-Trimethylbenzoyldiphenylphosphinoxid, Bis -(4-methoxybenzoyl)diethylgerman (Ivocerin®).
und/oder
der Isocyanurat-Trimerisierungskatalysator ist ausgewählt ist aus: Kaliumacetat, Kaliumacetat in Kombination mit einem Kronenether, Kaliumacetat in Kombination mit einem Polyethylenglykol, Kaliumacetat in Kombination mit einem Polypropylenglykol, Zinnoctoat, Natriumphenolat, Kaliumhydroxid, Trioctylphosphin und/oder Tributylzinnoxid.

In einer weiteren bevorzugten Ausführungsform wird die Oberfläche des nach Schritt III) oder IV) erhaltenen Gegenstands mit einer Zerewitinoff-aktive H-Atome aufweisenden Verbindung kontaktiert, wobei als natürliche Luftfeuchtigkeit in der den Vorläufer und/oder den Gegenstand umgebenden Atmosphäre vorkommendes Wasser ausgenommen ist. Bei einer Reaktion von noch freien NCO-Gruppen mit diesen Verbindungen kann eine Funktionalisierung der Oberflächen erreicht werden. Die Zerewitinoff-aktive H-Atome aufweisende Verbindung kann beispielsweise durch Eintauchen, Aufsprühen oder Bestreichen mit der Oberfläche des Vorläufers in Kontakt gebracht werden. Eine weitere Möglichkeit ist die Kontaktierung über die Gasphase, beispielsweise mittels Ammoniak oder Wasserdampf. Optional kann ein Katalysator die Reaktion beschleunigen.

Beispiele für als Funktionalisierungsreagenz geeignete Verbindungen sind Alkohole, Amine, Säuren und ihre Derivate, Epoxide und insbesondere Polyole, wie zum Beispiel Zucker, Polyacrylatpolyole, Polyesterpolyole, Polyetherpolyole, Polyvinylalkohole, Polycarbonatpolyole, Polyethercarbonatpolyole und Polyestercarbonatpolyole, langkettige aliphatische Alkohole, fluorierte oder chlorierte Alkohole. Weitere Beispiele sind Polyacrylsäure, Polyamide, Polysiloxane, Polyacrylamide, Polyvinylpyrrolidone, Polyvinylbutyrat, Polyketone, Polyetherketone, Polyacetale und Polyamine. Auch zur gezielten Ausbildung von Harnstoffen können Amine eingesetzt werden.

Vorzugsweise wird ein langkettiger Alkylalkohol, ein langkettiges (sekundäres) Alkylamin, eine Fettsäure, ein epoxidierter Fettsäureester, ein (per)fluorierter langkettiger Alkohol oder deren Mischungen eingesetzt. "Langkettig" ist hier als ab 6 C-Atomen, vorzugsweise ab 8 C-Atomen, mehr bevorzugt ab 10 C-Atomen in der längsten Kette der Verbindung zu verstehen. Die Herstellung von modifizierten Polyisocyanaten ist prinzipiell bekannt und beispielsweise in EP-A 0 206 059 und EP-A 0 540 985 beschrieben. Sie erfolgt vorzugsweise bei Temperaturen von 40 bis 180 °C.

In einer weiteren bevorzugten Ausführungsform weist das Verfahren die zusätzlichen Merkmale auf:

- der Träger ist innerhalb eines Behälters angeordnet und vertikal in Schwerkraftrichtung absenkbar,
- der Behälter enthält das radikalisch vernetzbare Harz in einer Menge, welche ausreicht, um wenigstens den Träger und auf dem Träger abgeschiedenes vernetztes Harz zu bedecken,
- vor jedem Schritt II) wird der Träger um eine vorbestimmte Strecke abgesenkt, so dass über der in vertikaler Richtung gesehen obersten Lage des Aufbaumaterials sich eine Schicht des radikalisch vernetzbaren Harzes bildet und
- in Schritt II) belichtet und/oder bestrahlt ein Energiestrahl den ausgewählten Bereich der Schicht des radikalisch vernetzbaren Harzes, entsprechend dem jeweils ausgewählten Querschnitt des Vorläufers.

Somit wird gemäß dieser Ausführungsform das additive Fertigungsverfahren der Stereolithographie (SLA) abgedeckt. Der Träger kann beispielsweise jeweils um eine vorbestimmte Strecke von ≥ 1 μm bis ≤ 2000 μm abgesenkt werden.

In einer weiteren bevorzugten Ausführungsform weist das Verfahren mindestens eines, bevorzugt mindestens zwei, oder bevorzugt alle der zusätzlichen Merkmale auf:

- der Träger ist innerhalb eines Behälters angeordnet und vertikal entgegen der Schwerkraftrichtung anhebbar,
- der Behälter stellt das radikalisch vernetzbare Harz bereit,
- vor jedem Schritt II) wird der Träger um eine vorbestimmte Strecke angehoben, so dass unter der in vertikaler Richtung gesehen untersten Lage des Aufbaumaterials sich eine Schicht des radikalisch vernetzbaren Harzes bildet und
- in Schritt II) belichtet und/oder bestrahlt eine Mehrzahl von Energiestrahlen den ausgewählten Bereich der Schicht des radikalisch vernetzbaren Harzes, entsprechend dem jeweils ausgewählten Querschnitt des Vorläufers, gleichzeitig.

Somit wird gemäß dieser Ausführungsform das additive Fertigungsverfahren der DLP-Technologie abgedeckt, wenn die Mehrzahl von Energiestrahlen über ein Array von einzeln ansteuerbaren Mikrospiegeln das per Belichtung und/oder Bestrahlung bereitzustellende Bild erzeugen. Der Träger kann beispielsweise jeweils um eine vorbestimmte Strecke von ≥ 1 μm bis ≤ 2000 μm angehoben werden.

In einer weiteren bevorzugten Ausführungsform weist das Verfahren die zusätzlichen Merkmale auf:

- in Schritt II) wird das radikalisch vernetzbare Harz aus einem Druckkopf, entsprechend dem jeweils ausgewählten Querschnitt des Vorläufers, aufgetragen und anschließend belichtet und/oder bestrahlt.

Somit wird gemäß dieser Ausführungsform das additive Fertigungsverfahren der Inkjet-Methode abgedeckt: es wird das vernetzbare Harz gegebenenfalls separat von den erfindungsgemäßen Katalysatoren selektiv durch einen oder mehrere Druckköpfe aufgetragen und die anschließende Härtung durch Bestrahlen und/oder Belichtung kann unselektiv sein, beispielsweise durch eine UV-Lampe. Bei dem oder den Druckköpfen zum Auftragen des Harzes kann es sich um einen (modifizierten) Druckkopf für Tintenstrahldruckverfahren handeln. Der Träger kann vom Druckkopf weg bewegbar ausgestaltet sein oder der Druckkopf kann vom Träger weg bewegbar ausgestaltet sein. Die Inkremente der Abstandsbewegungen zwischen Träger und Druckkopf können beispielsweise in einem Bereich von ≥ 1 μm bis ≤ 2000 μm liegen.

Insbesondere bei dieser Ausführungsform kann durch eine geringe Anzahl von Wiederholungen des Schritts II) ein sehr dünner Vorläufer aufgebaut werden. Dieser Vorläufer kann auch auf einem Substrat als Träger aufgebaut werden, welches eine Funktion in der späteren Verwendung des hergestellten Gegenstandes einnimmt. Dann ist es gerechtfertigt, von dem Auftragen einer Oberfläche auf den Träger oder das Substrat zu sprechen. Das Substrat kann beispielsweise ein Innen- oder Außenteil eines Fahrzeugs sein. Das erfindungsgemäße Verfahren gemäß dieser Ausführungsform lässt sich dann auch als Lackierverfahren ansehen.

In einer weiteren bevorzugten Ausführungsform reagiert das nach Schritt III) noch vorliegende Oxadiazintrion in Schritt IV) unter $CO_2$-Abspaltung durch Reaktion mit einem Alkohol und/oder Amin, bevorzugt mit einem mindestens bifunktionellen Alkohol und/oder Amin zu einem 3D-gedruckten Schaum mit bevorzugten mittleren Porendurchmessern von ≤ 2 mm und vorzugsweise ≤ 1 mm.

In einer weiteren bevorzugten Ausführungsform reagiert das nach Schritt III) noch vorliegende Oxadiazintrion in Schritt IV) unter $CO_2$-Abspaltung durch thermische Aktivierung zu einem 3D-gedruckten Schaum mit bevorzugten mittleren Porendurchmessern von ≤ 2 mm und vorzugsweise ≤ 1 mm.

Ein weiterer Aspekt der vorliegenden Erfindung ist die Verwendung eines radikalisch vernetzbaren Harzes, welches eine Viskosität (23 °C, DIN EN ISO 2884-1) von ≥ 5 mPas bis ≤ 100000 mPas aufweist, in einem additiven Fertigungsverfahren, wobei das radikalisch vernetzbare Harz eine härtbare Komponente umfasst, welche durch die Reaktion eines Polyisocyanats oder eines Polyisocyanat-Folgeprodukts enthaltend mindestens eine Oxadiazintriongruppe (Formel 1)

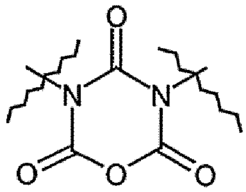

(Formel 1)

mit einem Acrylat-, Methacrylat- oder Vinylether-Doppelbindungen enthaltenden Verbindung mit Zerewitinoff-aktiven H-Atomen erhalten wird.

Hinsichtlich der härtbaren Verbindung gelten bei der erfindungsgemäßen Verwendung die gleichen Überlegungen und bevorzugten Ausführungsformen wie zuvor in Hinblick auf das erfindungsgemäße Verfahren. Zur Vermeidung unnötiger Wiederholungen werden sie nicht erneut wiedergegeben. Es sei lediglich angemerkt, dass in einer weiteren bevorzugten Ausführungsform der Verwendung in der härtbaren Komponente das Polyisocyanat oder Polyisocyanat-Folgeprodukt enthaltend die mindestens eine Oxadiazintriongruppe unter Einsatz von 1,6-Hexamethylendiisocyanat und/ oder 1,5-Pentamethylendiisocyanat und eines Polyesteralkohols enthaltend (Meth)Acrylatgruppen hergestellt wird.

In einer weiteren bevorzugten Ausführungsform der Verwendung umfasst das additive Fertigungsverfahren das Belichten und/oder Bestrahlen eines zuvor ausgewählten Bereichs oder aufgetragenen Bereichs des radikalisch vernetzbaren Harzes. Das additive Fertigungsverfahren kann beispielsweise ein Stereolithographie- oder ein DLP (digital light processing)-Verfahren sein. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Die Erfindung betrifft weiterhin die Verwendung von Produkten, die gemäß einem Verfahren nach der vorliegenden Erfindung erhältlich sind, als Teil(e) von körperstützenden Elementen, orthopädische Hilfsmittel wie Einlagen, Kissen, Sitzen, Matratzen, Prothesen, Exo-Skeleten, als orthodontisches Hilfsmittel wie eine Zahnspange, Beißschutz, Zahnschutz, als Bestandteil von Kompositwerkstoffen, als Bauteile und/oder Ersatzteile im Bereich Transport und Industrie.

## Beispiele

Alle Prozentangaben beziehen sich sofern nicht abweichend angegeben auf Gewichtsprozent (Gew.-%).

Die Bestimmung der NCO-Gehalte in % wurde über Rücktitration mit 0,1 mol/l Salzsäure nach Reaktion mit Butylamin vorgenommen, gemäß DIN EN ISO 11909.

Die Viskositätsmessungen wurden mit einem Platte-Platte Rotationsviskosimeter, RotoVisko 1 der Firma *Haake*, DE, mit einer Schergeschwindigkeit von 40 Hz nach ISO/DIN 3219:1990 durchgeführt.

Die zur Zeit der Versuchsdurchführung herrschende Umgebungstemperatur von 23 °C wird als RT bezeichnet.

Alle Chemikalien und Einsatzstoffe für die keine Angabe der Bezugsquelle eindeutig angegeben wurde, wurden von Sigma-Aldrich bezogen.

**Beispiel 1:** Erfindungsgemäßes Bindemittel

In einem 2000 ml-Vierhalsrundkolben mit Rückflußkühler, beheizbarem Ölbad, mechanischem Rührer, Stickstoffeinleitung (Tauchrohr), Innenthermometer und Tropftrichter wurden 532,6 g Baymicron® Oxa WM06 (Covestro Deutschland AG, Leverkusen) und 5,33g Triethylamin vorgelegt. Es wurden dann bei RT über einen Zeitraum von ca. 40 min 700 g leicht erwärmtes (ca. 40 °C) Terathane® PTMEG 1000 (Invista™, Wichita, USA) zugetropft. Dabei war eine deutliche Gasentwicklung erkennbar. Anschließend wurde auf 55 °C aufgeheizt und unter Durchleitung von Stickstoff weitere 100 min gerührt bis keine weitere Gasentwicklung mehr sichtbar war. Es wurde anschließend dreimal mit jeweils

ca. 300 g Toluol am Rotationsverdampfer codestilliert (30 °C, Druck abfallend, bis auf ca. 5 mbar), um überschüssiges Triethylamin zu entfernen. Zur Stabilisierung wurden 0,12 g Dibutylphosphat zugegeben und ca. 30 min bei 50 °C verrührt.

400 g des so erhaltenen Produktes wurden in einem 1000 ml Vierhalsrundkolben mit Rückflußkühler, beheizbarem Ölbad, mechanischem Rührer, Innenthermometer und Tropftrichter vorgelegt und mit 0,22 g 2,6-Di-tert.-butyl-4-methylphenol sowie 0,04 g Dibutylzinndilaurat versetzt und unter Rühren auf 40 °C aufgeheizt. Es wurden dann über ca. 30 min 41,55 g Hydroxyethylmethacrylat zugetropft und noch weitere 30 min bei 50°C nachgerührt.

Es wurde eine fast farblose viskose Flüssigkeit mit einem NCO-Gehalt von 2,8 % und einer Viskosität von 39.270 mPas (23°C) erhalten.

**Beispiel 2:** nicht erfindungsgemäßes Bindemittel

In einem 2000 ml-Vierhalsrundkolben mit Rückflußkühler, beheizbarem Ölbad, mechanischem Rührer, Stickstoffeinleitung, Innenthermometer und Tropftrichter wurden 535,7 Hexamethylendiisocyanat (Desmodur® H, Covestro Deutschland AG, Leverkusen) und 0,053 g Zinkoctoat (Borchi® Kat 22, Borchers GmbH, Langenfeld, DE) vorgelegt und unter Rühren auf 60 °C erwärmt. Es wurden dann über ca. 30 min 398,6 g leicht erwärmtes (40°C) Terathane® PTMEG 1000 (Invista™, Wichita, USA) zugetropft. Die Temperatur wurde dann auf 90 °C erhöht und es wurde weitere 6 Stunden gerührt, bis ein NCO-Gehalt von 21,5 % erreicht war. Nach Abkühlung auf 60 °C wurden 0,47 g Dibutylphosphat zugegeben und verrührt. Anschließend wurde das verbleibende Hexamethylendiisocyanat durch eine Dünnschichtdestillation (150 °C; 0,5 mbar) entfernt.

560,6 g des so erhaltenen Produktes wurden in einem 1000 ml Vierhalsrundkolben mit Rückflußkühler, beheizbarem Ölbad, mechanischem Rührer, Innenthermometer und Tropftrichter vorgelegt und mit 0,31 g 2,6-Di-tert.-butyl-4-methylphenol sowie 0,06 g Dibutylzinndilaurat versetzt und unter Rühren auf 40 °C aufgeheizt. Es wurden dann über ca. 30 min 66,86 g Hydroxyethylmethacrylat zugetropft und noch weitere 6 Stunden bei 60 °C nachgerührt.

Es wurde eine leicht gelbliche viskose Flüssigkeit mit einem NCO-Gehalt von 3,0 % und einer Viskosität von 63.640 mPas (23 °C) erhalten.

**Druckexperimente**

Formulierungen für den Druckprozess wurden hergestellt aus den Bindemitteln gemäß Beispiel 1 und 2, dem Reaktivverdünner Dipropylene glycol diacrylat (DPGDA); (bezogen von der Firma *abcr GmbH,* Karlsruhe), dem Photoinitiator Omnirad BL 750 (bezogen von der Firma *iGM Resins,* Waalwijk, NL), dem UV-Blocker 2,2'-(2,5-thiophenediyl)bis(5-(1,1-dimethylethyl)-benzoxazol (bezogen von Sigma-Aldrich). Die Zusammensetzung der Formulierungen A und B ist in folgender Tabelle angegeben:

| Formulierung | A | B |
|---|---|---|
| Erfindungsgemäßes Bindemittel gemäß Beispiel 1 | 60 g | |
| Nicht erfindungsgemäßes Bindemittel gemäß Beispiel 2 | | 60 g |
| Reaktivverdünner | 90 g | 90 g |
| Photoinitiator | 1,5 g | 1,5 g |
| UV-Blocker | 0,195 g | 0,195 g |
| Viskosität nach Mischen der Formulierung | 600 mPas | 3780 mPas |

Die Formulierungen wurden in einem Kunststoffbecher mit Deckel mit einem Planetenkreiselmischer *Thinky ARE250* bei Raumtemperatur für ca. 2 Minuten bei einer Umdrehungszahl von 2000 Umdrehungen pro Minute vermischt.

Formulierung A mit einer Viskosität von 600 mPas basierend auf dem erfindungsgemäßen Bindemittel gemäß Beispiel 1 wurde in die DLP-basierten 3D-Druckanlage vom Typ *Ember* des Herstellers *Autodesk* gefüllt. Es wurden erfolgreich Probenstäbe mit den Abmessungen: 60 x 10 x 2 $mm^3$ mit den folgenden Druckparametern hergestellt: Die Wellenlänge für die Belichtung betrug 405 nm. Die Schichtdicke betrug jeweils 50 $\mu$m. Die Belichtungszeit betrug für die erste Schicht zur Haftung auf der Aluminiumträgergrundplatte 3,8 s, für drei Zwischenhaftungsschichten 2,8 s pro Schicht und für die darauf folgenden weiteren Schichten 1,7 s pro Schicht.

Formulierung B mit einer Viskosität von 3780 mPas basierend auf dem nicht erfindungsgemäßen Bindemittel gemäß Beispiel 2 konnte aufgrund der hohen Viskosität bei gleichem Mischungsverhältnis von Bindemittel zu Reaktivverdünner wie in Formulierung A nicht erfolgreich verdruckt werden.

**Patentansprüche**

1. Verfahren zur Herstellung eines Gegenstandes, umfassend die Schritte:

   I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Gegenstandes entspricht;
   II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Gegenstandes entspricht und welche mit der zuvor aufgetragenen Lage verbunden ist;
   III) Wiederholen des Schritts II), bis der Gegenstand gebildet ist;

   wobei das Abscheiden eines radikalisch vernetzten Harzes in Schritt I) und Schritt II) ein Aufbringen eines radikalisch vernetzbaren Harzes auf den Träger bzw. die vorherige Lage beinhaltet, und wenigstens in Schritt II) durch Einwirken von Energie auf einen ausgewählten Bereich des radikalisch vernetzbaren Harzes, entsprechend dem jeweils ausgewählten Querschnitt des Gegenstandes, erfolgt und
   wobei das radikalisch vernetzbare Harz eine Viskosität (23 °C, DIN EN ISO 2884-1) von $\geq$ 5 mPas bis $\leq$ 100000 mPas aufweist,
   **dadurch gekennzeichnet, dass**
   das radikalisch vernetzbare Harz eine härtbare Komponente umfasst, welche durch die Reaktion eines Polyisocyanats oder eines Polyisocyanat-Folgeprodukts enthaltend mindestens eine Oxadiazintriongruppe (Formel 1)

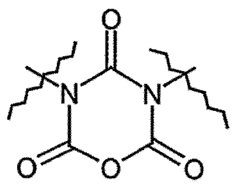
(Formel 1)

   mit einem Acrylat-, Methacrylat- oder Vinylether-Doppelbindungen enthaltenden Verbindung mit Zerewitinoff-aktiven H-Atomen erhalten wird.

2. Verfahren gemäß Anspruch 1, **dadurch gekennzeichnet, dass** das Polyisocyanat oder Polyisocyanat-Folgeprodukt enthaltend mindestens eine Oxadiazintriongruppe (Formel 1) unter Verwendung von 1,6-Hexamethylendiisocyanat und/oder 1,5-Pentamethylendiisocyanat als Reaktionskomponente hergestellt wird.

3. Verfahren gemäß Anspruch 1 oder 2, **dadurch gekennzeichnet, dass** das Polyisocyanat oder Polyisocyanat-Folgeprodukt enthaltend mindestens eine Oxadiazintriongruppe (Formel 1) unter Verwendung eines Polyesteralkohols enthaltend (Meth)Acrylatgruppen hergestellt wird.

4. Verfahren gemäß einem der Ansprüche 1 bis 3, **dadurch gekennzeichnet, dass** in dem Harz die härtbare Komponente in einem Anteil von > 0,1 Gewichts-% bis $\leq$ 90 Gewichts-%, bezogen auf das Gesamtgewicht des Harzes, vorliegt.

5. Verfahren gemäß einem der Ansprüche 1 bis 4, **dadurch gekennzeichnet, dass** in dem Harz freie Isocyanat-Gruppen in einem Anteil von > 0 Gewichts-% bis $\leq$ 30 Gewichts-%, bezogen auf das Gesamtgewicht des Harzes, vorliegen.

6. Verfahren gemäß einem der Ansprüche 1 bis 5, **dadurch gekennzeichnet, dass** in dem Harz funktionelle Gruppen mit Zerewitinoff-aktiven H-Atomen in einem Anteil von > 0 Gewichts-% bis $\leq$ 10 Gewichts-%, bezogen auf das Gesamtgewicht des Harzes, vorliegen

7. Verfahren gemäß einem der Ansprüche 1 bis 6, **dadurch gekennzeichnet, dass** in dem Harz freie polymerisationsaktive C=C Doppelbindungen in einem Anteil von > 1 Gewichts-% bis $\leq$ 10 Gewichts-%, bezogen auf das Gesamtgewicht des Harzes vorliegen.

8. Verfahren gemäß Anspruch 5 oder 6, **dadurch gekennzeichnet, dass** nach Schritt III) weiterhin Schritt IV) durchgeführt wird:
IV) Behandeln des nach Schritt III) erhaltenen Gegenstands bei Bedingungen, die ausreichen, um im radikalisch vernetzten Harz des erhaltenen Gegenstands vorliegende Isocyanat-Gruppen zumindest teilweise mit weiteren NCO-Gruppen oder Verbindungen mit Zerewitinoff-aktiven H-Atomen mit Reaktion zu bringen.

**9.** Verfahren gemäß einem der Ansprüche 1 bis 8, **dadurch gekennzeichnet, dass** das radikalisch vernetzbare Harz weiterhin einen Radikalstarter und/oder einen Isocyanat-Trimerisierungskatalysator umfasst.

**10.** Verfahren gemäß einem der Ansprüche 1 bis 8, **dadurch gekennzeichnet, dass** die Oberfläche des nach Schritt III) oder IV) erhaltenen Gegenstands mit einer Zerewitinoff-aktive H-Atome aufweisenden Verbindung kontaktiert wird, wobei als natürliche Luftfeuchtigkeit in der den Vorläufer und/oder den Gegenstand umgebenden Atmosphäre vorkommendes Wasser ausgenommen ist.

**11.** Verfahren gemäß einem der Ansprüche 1 bis 9, **dadurch gekennzeichnet, dass**:

- der Träger innerhalb eines Behälters angeordnet ist und vertikal in Schwerkraftrichtung absenkbar ist,
- der Behälter das radikalisch vernetzbare Harz bereitstellt,
- vor jedem Schritt II) der Träger um eine vorbestimmte Strecke abgesenkt wird, wobei über der in vertikaler Richtung gesehen obersten Lage des Aufbaumaterials sich eine Schicht des radikalisch vernetzbaren Harzes bildet und
- in Schritt II) ein Energiestrahl den ausgewählten Bereich der Schicht des radikalisch vernetzbaren Harzes, entsprechend dem jeweils ausgewählten Querschnitt des Gegenstandes, belichtet und/oder bestrahlt.

**12.** Verfahren gemäß einem der Ansprüche 1 bis 10, **dadurch gekennzeichnet, dass**:

- der Träger innerhalb eines Behälters angeordnet ist und vertikal entgegen der Schwerkraftrichtung anhebbar ist,
- der Behälter das radikalisch vernetzbare Harz bereitstellt,
- vor jedem Schritt II) der Träger um eine vorbestimmte Strecke angehoben wird, so dass unter der in vertikaler Richtung gesehen untersten Lage des Aufbaumaterials sich eine Schicht des radikalisch vernetzbaren Harzes bildet und
- in Schritt II) eine Mehrzahl von Energiestrahlen den ausgewählten Bereich der Schicht des radikalisch vernetzbaren Harzes, entsprechend dem jeweils ausgewählten Querschnitt des Gegenstandes, gleichzeitig belichtet und/oder bestrahlt.

**13.** Verfahren gemäß einem der Ansprüche 1 bis 10, **dadurch gekennzeichnet, dass**:

- in Schritt II) wird das radikalisch vernetzbare Harz aus einem Druckkopf, entsprechend dem jeweils ausgewählten Querschnitt des Vorläufers, aufgetragen wird und anschließend belichtet und/oder bestrahlt.

**14.** Verwendung eines radikalisch vernetzbaren Harzes, welches eine Viskosität (23 °C, DIN EN ISO 2884-1) von $\geq 5$ mPas bis $\leq 100000$ mPas aufweist, in einem additiven Fertigungsverfahren, **dadurch gekennzeichnet, dass** das radikalisch vernetzbare Harz eine härtbare Komponente umfasst, welche durch die Reaktion eines Polyisocyanats oder eines Polyisocyanat-Folgeprodukts enthaltend mindestens eine Oxadiazintriongruppe (Formel 1)

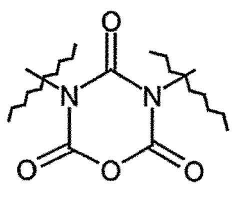

(Formel 1)

mit einem Acrylat-, Methacrylat- oder Vinylether-Doppelbindungen enthaltenden Verbindung mit Zerewitinoff-aktiven H-Atomen erhalten wird.

**15.** Verwendung von Produkten, die gemäß einem Verfahren nach einem der Ansprüche 1 bis 13 erhältlich sind, als Teil(e) von körperstützenden Elementen, orthopädische Hilfsmittel wie Einlagen, Kissen, Sitzen, Matratzen, Prothesen, Exo-Skeleten, als orthodontisches Hilfsmittel wie eine Zahnspange, Beißschutz, Zahnschutz, als Bestandteil

von Kompositwerkstoffen, als Bauteile und/oder Ersatzteile im Bereich Transport und Industrie.

## Claims

1. Process for producing an article, comprising the steps of:

   I) depositing a free-radically crosslinked resin on a carrier to obtain a ply of a build material joined to the carrier that corresponds to a first selected cross section of the article;
   II) depositing a free-radically crosslinked resin onto a previously applied ply of the build material to obtain a further ply of the build material that corresponds to a further selected cross section of the article and which is joined to the previously applied ply;
   III) repeating step II) until the article is formed;

   wherein the depositing of a free-radically crosslinked resin in step I) and step II) comprises an application of a free-radically crosslinkable resin to the carrier/preceding ply and, in step II) at least, is effected by introducing energy to a selected region of the free-radically crosslinkable resin corresponding to the respectively selected cross section of the article, and
   wherein the free-radically crosslinkable resin has a viscosity (23°C, DIN EN ISO 2884-1) of ≥ 5 mPas to ≤ 100 000 mPas,
   **characterized in that**
   the free-radically crosslinkable resin includes a curable component that is obtained by reacting a polyisocyanate or a polyisocyanate-derived product containing at least one oxadiazinetrione group (formula 1)

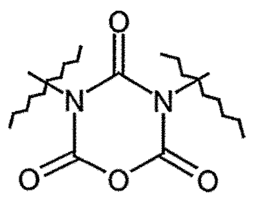

(Formula 1)

   with a compound containing acrylate, methacrylate or vinyl ether double bonds that has Zerewitinoff-active hydrogen atoms.

2. Process according to Claim 1, **characterized in that** the polyisocyanate or polyisocyanate-derived product containing at least one oxadiazinetrione group (formula 1) is prepared using hexamethylene 1,6-diisocyanate and/or pentamethylene 1,5-diisocyanate as reactant.

3. Process according to Claim 1 or 2, **characterized in that** the polyisocyanate or polyisocyanate-derived product containing at least one oxadiazinetrione group (formula 1) is prepared using a polyester alcohol containing (meth)acrylate groups.

4. Process according to any of Claims 1 to 3, **characterized in that** the curable component is present in the resin in a proportion of > 0.1% by weight to ≤ 90% by weight based on the total weight of the resin.

5. Process according to any of Claims 1 to 4, **characterized in that** free isocyanate groups are present in the resin in a proportion of > 0% by weight to ≤ 30% by weight based on the total weight of the resin.

6. Process according to any of Claims 1 to 5, **characterized in that** functional groups having Zerewitinoff-active hydrogen atoms are present in the resin in a proportion of > 0% by weight to ≤ 10% by weight based on the total weight of the resin.

7. Process according to any of Claims 1 to 6, **characterized in that** free polymerization-active C=C double bonds are present in the resin in a proportion of > 1% by weight to ≤ 10% by weight based on the total weight of the resin.

8. Process according to Claim 5 or 6, **characterized in that** step III) is followed by a further step IV):

IV) treating the article obtained in step III) under conditions sufficient for reaction of at least some of the isocyanate groups present in the free-radically crosslinked resin of the article obtained with further NCO groups or compounds having Zerewitinoff-active hydrogen atoms.

**9.** Process according to any of Claims 1 to 8, **characterized in that** the free-radically crosslinkable resin further includes a free-radical initiator and/or an isocyanate trimerization catalyst.

**10.** Process according to any of Claims 1 to 8, **characterized in that** the surface of the article obtained in step III) or IV) is contacted with a compound having Zerewitinoff-active hydrogen atoms, excluding water occurring as natural air humidity in the atmosphere surrounding the precursor and/or the article.

**11.** Process according to any of Claims 1 to 9, **characterized in that**:

- the carrier is positioned inside a container and can be lowered vertically in the direction of gravity,
- the container provides the free-radically crosslinkable resin,
- before each step II) the carrier is lowered by a predetermined distance, forming a layer of the free-radically crosslinkable resin above the uppermost ply of the build material viewed in the vertical direction, and
- in step II) an energy beam exposes and/or irradiates the selected region of the layer of the free-radically crosslinkable resin corresponding to the respectively selected cross section of the article.

**12.** Process according to any of Claims 1 to 10, **characterized in that**:

- the carrier is positioned inside a container and can be raised vertically counter to the direction of gravity,
- the container provides the free-radically crosslinkable resin,
- before each step II) the carrier is raised by a predetermined distance so that a layer of the free-radically crosslinkable resin forms below the lowermost ply of the build material viewed in the vertical direction and
- in step II) a plurality of energy beams simultaneously exposes and/or irradiates the selected region of the layer of the free-radically crosslinkable resin corresponding to the respectively selected cross section of the article.

**13.** Process according to any of Claims 1 to 10, **characterized in that**:

- in step II) the free-radically crosslinkable resin is applied from a print head corresponding to the respectively selected cross section of the precursor and is subsequently exposed and/or irradiated.

**14.** Use of a free-radically crosslinkable resin having a viscosity (23°C, DIN EN ISO 2884-1) of ≥ 5 mPas to ≤ 100 000 mPas in an additive manufacturing process, **characterized in that** the free-radically crosslinkable resin includes a curable component that is obtained by reacting a polyisocyanate or a polyisocyanate-derived product containing at least one oxadiazinetrione group (formula 1)

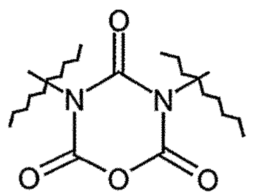

(Formula 1)

with a compound containing acrylate, methacrylate or vinyl ether double bonds that has Zerewitinoff-active hydrogen atoms.

**15.** Use of products obtainable by a process according to any of Claims 1 to 13 as part(s) of body-supporting elements, orthopedic aids such as insoles, cushions, seats, mattresses, prostheses, exoskeletons, as an orthodontic aid such as a brace, bite guard, mouthguard, as a component of composite materials, as structural elements and/or replacement parts in the field of transport and industry.

## Revendications

1. Procédé de fabrication d'un objet, comprenant les étapes

   I) dépôt d'une résine réticulée par voie radicalaire sur un support, de manière à obtenir une couche d'un matériau de construction lié au support, laquelle couche correspond à une première section transversale sélectionnée de l'objet ;
   II) dépôt d'une résine réticulée par voie radicalaire sur une couche appliquée au préalable du matériau de construction de manière à obtenir une autre couche du matériau de construction qui correspond à une autre section transversale sélectionnée de l'objet et qui est reliée à la couche appliquée au préalable ;
   III) répétition de l'étape II) jusqu'à ce que l'objet soit formé ;

   le dépôt d'une résine réticulée par voie radicalaire dans l'étape I) et l'étape II) comportant une application d'une résine réticulable par voie radicalaire sur le support ou sur la couche préalable et ayant lieu, au moins dans l'étape II), par action d'énergie sur une zone sélectionnée de la résine réticulable par voie radicalaire, conformément à la section transversale respective sélectionnée de l'objet et la résine réticulable par voie radicalaire présentant une viscosité (23°C, DIN EN ISO 2884-1) de ≥ 5 mPa.s à ≤ 100.000 mPa.s, **caractérisé en ce que** la résine réticulable par voie radicalaire comprend un composant durcissable qui est obtenu par réaction d'un polyisocyanate ou d'un produit dérivé d'un polyisocyanate contenant au moins un groupe oxadiazinetrione (formule 1)

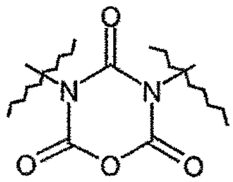

(Formule 1)

   avec un composé contenant des doubles liaisons acrylate, méthacrylate ou vinyléther et présentant des atomes d'H actifs selon Zeréwitinoff.

2. Procédé selon la revendication 1, **caractérisé en ce que** le polyisocyanate ou le produit dérivé d'un polyisocyanate contenant au moins un groupe oxadiazinetrione (formule 1) est préparé à l'aide de diisocyanate de 1,6-hexaméthylène et/ou de diisocyanate de 1,5-pentaméthylène en tant que composant de réaction.

3. Procédé selon la revendication 1 ou 2, **caractérisé en ce que** le polyisocyanate ou le produit dérivé d'un polyisocyanate contenant au moins un groupe oxadiazinetrione (formule 1) est préparé à l'aide d'un polyester-alcool contenant des groupes (méth)acrylate.

4. Procédé selon l'une quelconque des revendications 1 à 3, **caractérisé en ce que**, dans la résine, le composant durcissable se trouve en une proportion de > 0,1% en poids à ≤ 90% en poids, par rapport au poids total de la résine.

5. Procédé selon l'une quelconque des revendications 1 à 4, **caractérisé en ce que** la résine présente des groupes isocyanate libres en une proportion de > 0% en poids à ≤ 30% en poids, par rapport au poids total de la résine.

6. Procédé selon l'une quelconque des revendications 1 à 5, **caractérisé en ce que** la résine présente des groupes fonctionnels présentant des atomes d'H actifs selon Zeréwitinoff en une proportion de > 0% en poids à ≤ 90% en poids, par rapport au poids total de la résine.

7. Procédé selon l'une quelconque des revendications 1 à 6, **caractérisé en ce que** la résine présente des doubles liaisons C=C actives en polymérisation en une proportion de > 1% en poids à ≤ 10% en poids, par rapport au poids total de la résine.

8. Procédé selon la revendication 5 ou 6, **caractérisé en ce qu'**en outre, une étape IV) est réalisée après l'étape III) :

   IV) traitement de l'objet obtenu après l'étape III) dans des conditions qui suffisent pour faire réagir des groupes

isocyanate se trouvant dans la résine réticulée par voie radicalaire de l'objet obtenu au moins partiellement avec d'autres groupes NCO ou composés présentant des atomes d'H actifs selon Zéréwitinoff.

**9.** Procédé selon l'une quelconque des revendications 1 à 8, **caractérisé en ce que** la résine réticulable par voie radicalaire comprend en outre un initiateur radicalaire et/ou un catalyseur de trimérisation d'isocyanate.

**10.** Procédé selon l'une quelconque des revendications 1 à 8, **caractérisé en ce que** la surface de l'objet obtenu après l'étape III) ou IV) est mise en contact avec un composé présentant des atomes d'H actifs selon Zéréwitinoff, l'eau se trouvant sous forme d'humidité naturelle de l'air dans l'atmosphère entourant les précurseurs et/ou l'objet étant exclue.

**11.** Procédé selon l'une quelconque des revendications 1 à 9, **caractérisé en ce que**

- le support est disposé dans un récipient et peut être abaissé verticalement dans le sens de la gravité,
- le récipient met à disposition la résine réticulable par voie radicalaire,
- avant chaque étape II), le support est abaissé d'une distance définie, une couche de la résine réticulable par voie radicalaire se formant sur la couche supérieure du matériau de construction, vu dans la direction verticale et
- dans l'étape II), un rayon d'énergie éclaire et/ou irradie la zone sélectionnée de la couche de la résine réticulable par voie radicalaire, conformément à la section transversale respective sélectionnée de l'objet.

**12.** Procédé selon l'une quelconque des revendications 1 à 10, **caractérisé en ce que**

- le support est disposé dans un récipient et peut être soulevé verticalement à l'opposé du sens de la gravité,
- le récipient met à disposition la résine réticulable par voie radicalaire,
- avant chaque étape II), le support est soulevé d'une distance définie, de telle sorte qu'une couche de la résine réticulable par voie radicalaire se forme sous la couche inférieure du matériau de construction, vu dans la direction verticale et
- dans l'étape II), une multitude de rayons énergétiques éclairent et/ou irradient simultanément la zone sélectionnée de la couche de la résine réticulable par voie radicalaire, conformément à la section transversale respective sélectionnée de l'objet.

**13.** Procédé selon l'une quelconque des revendications 1 à 10, **caractérisé en ce que**

- dans l'étape II), la résine réticulable par voie radicalaire est appliquée à partir d'une tête d'impression, conformément à la section transversale respective sélectionnée du précurseur et est ensuite éclairée et/ou irradiée.

**14.** Utilisation d'une résine réticulable par voie radicalaire, qui présente une viscosité (23°C, DIN EN ISO 2884-1) de ≥ 5 mPa.s à ≤ 100.000 mPa.s, dans un procédé de fabrication additive, **caractérisée en ce que** la résine réticulable par voie radicalaire comprend un composant durcissable qui est obtenu par réaction d'un polyisocyanate ou d'un produit dérivé d'un polyisocyanate contenant au moins un groupe oxadiazinetrione (formule 1)

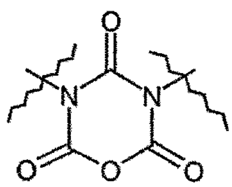

(Formule 1)

avec un composé contenant des doubles liaisons acrylate, méthacrylate ou vinyléther avec des atomes d'H actifs selon Zéréwitinoff.

**15.** Utilisation de produits qui peuvent être obtenus selon un procédé selon l'une quelconque des revendications 1 à 13 comme partie(s) d'éléments soutenant le corps, accessoires orthopédiques, tels que des garnitures, des coussins, des sièges, des matelas, des prothèses, des exosquelettes, comme accessoires orthodontiques, tels qu'un dentier, un cale-dents, une protection dentaire, comme constituant de matériaux composites, comme pièces et/ou pièces de remplacement dans le domaine du transport et de l'industrie.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004033522 A1
- DE 102004050868 A1
- DE 167066
- GB 2221465 A
- GB 2222161 A
- DE 3240613 A
- DE 3219608 A
- EP 0100129 A
- GB PS1391066 A
- GB PS1386399 A
- GB 809809 A
- EP 0056158 A
- EP 0056159 A
- EP 0033581 A
- EP 13196508
- EP 0206059 A
- EP 0540985 A


### In der Beschreibung aufgeführte Nicht-Patentliteratur


- Chemistry & Technology of UV & EB Formulations For Coatings. Inks & Paints. SITA Technology, 1991, vol. 2, 237-285
- *European Polymer Journal,* 1979, vol. 16, 147-148